# EUROPÄISCHE PATENTSCHRIFT

(11) **EP 1 098 796 B1**
(45) Veröffentlichungstag und Bekanntmachung des Hinweises auf die Patenterteilung: **15.11.2006**
(21) Anmeldenummer: 00941905.2
(22) Anmeldetag: 05.05.2000
(51) Int. Cl.: B60S 1/40

(54) **WISCHVORRICHTUNG FÜR SCHEIBEN VON KRAFTFAHRZEUGEN**
WIPER DEVICE FOR MOTOR VEHICLE WINDOWS
SYSTEME D'ESSUIE-GLACE POUR VEHICULES AUTOMOBILES

(30) Priorität: 28.05.1999 DE 19924662
(43) Veröffentlichungstag der Anmeldung: 16.05.2001
(73) Patentinhaber: ROBERT BOSCH GMBH, 70442 Stuttgart (DE)
(72) Erfinder: DE BLOCK, Peter, B-3545 Halen (BE)
(86) Internationale Anmeldenummer: PCT/DE2000/001424
(87) Internationale Veröffentlichungsnummer: WO 2000/073113

(56) Entgegenhaltungen:
- US-A- 4 132 490
- US-A- 4 980 944

## Beschreibung

### Stand der Technik

Die Erfindung geht aus von einer Wischvorrichtung nach der Gattung des Anspruchs 1 Eine derartige Wischvorrichtung mit den Merkmalen des Oberbegriffs des Anspruchs 1 ist aus der DE-A-2 640 399 bekannt, wobei der Wischerarm einem Zapfen bzw. einen gelenkbolzen aufweist. Bei einer bekannten Wischvorrichtung (DE-A-16 55 410) sind in einer auf die zu wischende Scheibe gerichteten Ansicht der Wischerarm und das Wischblatt nebeneinander beziehungsweise bezogen auf die Arbeitsrichtung der Wischvorrichtung hintereinander angeordnet. Dadurch wird eine geringere Bauhöhe für die Wischvorrichtung erreicht, als dies bei Wischvorrichtungen möglich ist, bei denen sich der Wischerarm über dem Wischblatt befindet (DE-A-15 05 397). Die geringere Bauhöhe der gattungsgemäßen Wischvorrichtung bringt Vorteile hinsichtlich des Abhebeverhaltens des Wischblatts von der Scheibe, insbesondere bei hohen Fahrgeschwindigkeiten.

Damit das Wischblatt während des Wischbetriebs auf dem Gelenkbolzen gesichert ist, ist bei der bekannten Wischvorrichtung der seitlich am Wischerarm angeordnete Gelenkbolzen in seinem Mittelabschnitt mit einer Ringnut versehen, in welche eine gegen Federkraft auslenkbare, am Wischblatt einendig festgelegte Blattfeder nach dem Aufbringen des Wischblatts auf den Gelenkbolzen eintaucht und zusammen mit den Seitenwänden der Ringnut die Sicherung des Wischblatts am Wischerarm gewährleistet. Die Anordnung und Ausbildung derartiger Sicherungsmittel ist kostenintensiv, weil einerseits der Gelenkbolzen mit der Ringnut versehen werden muss und andererseits beim Wischblatt-Austausch das neue Wischblatt mit einer entsprechenden Blattfeder versehen sein muss.

Bei einer anderen bekannten Wischvorrichtung (DE 26 40 399 A1) sind zwar der Gelenkbolzen und die durch einen Klappbügel gebildeten Sicherungsmittel an demselben Bauteil der Wischvorrichtung angeordnet. Wenn dieses Bauteil jedoch das Wischblatt ist, geht bei dessen Austausch neben dem Klappbügel auch der Gelenkbolzen verloren. Ist der Klappbügel am Wischerarm angebracht, besteht die Gefahr, dass die Federkraft im Laufe der Zeit nachlässt und die Sicherungsfunktion nicht mehr ausreichend gewährleisten kann.

### Vorteile der Erfindung

Bei der erfindungsgemäßen Wischvorrichtung mit den kennzeichnenden Merkmalen des Anspruchs 1 bleiben beim Wischblatt-Austausch sowohl die Sicherungsmittel als auch der Gelenkbolzen am Wischerarm erhalten. Die wischblattseitigen Sicherungsmittel - also der Anschlag - ist durch die entsprechende, stets vorhandene vom Wischerarm abgewandte Seitenwange des Wischblatts gebildet Eine besondere Ausgestaltung dieser Seitenwange ist nicht erforderlich.

Nach der Erfindung sind die Sicherungsmittel des Wischerarms durch an diesem ausgebildete, in Wischrichtung mit Abstand voneinander angeordnete, gegeneinander gerichtete Stützbereiche gebildet, zwischen denen voneinander wegweisende Paßbereiche des Wischblatts angeordnet sind. Dadurch ergibt sich eine kostengünstige Realisierung des Erfindungsgedankens.

Eine besonders robuste und damit betriebssichere Wischvorrichtung ergibt sich dadurch, dass der eine Stützbereich an einem Schwenkhebel des Wischerarms angeordnet ist und der Schwenkhebel einen in Richtung der Erstreckung der Gelenkachse vorspringenden, das Wischblatt querenden Ansatz aufweist, an dessen freien Ende ein zur Scheibe gerichteter Schenkel angeordnet ist, dessen dem Schwenkhebel zugewandte Seite den anderen Stützbereich bildet.

Eine besonders niedrig bauende und damit strömungsgünstige Wischvorrichtung wird erreicht, wenn das Wischblatt ein bandartig langgestrecktes, aus einem federelastischen Material gefertigtes Tragelement für eine auf der zu wischenden Scheibe anlegbare Wischleiste hat, an dessen von der Scheibe abgewandten Bandfläche ein zu einer Anschlußvorrichtung gehörendes, die Lagerausnehmung für den Gelenkbolzen aufweisendes Kupplungsteil angeordnet ist.

Um die Länge des Wischerarms auf das notwendige Maß zu begrenzen, ist der Abstand vom freien Ende des Wischerarms zur Gelenkachse kleiner als der Abstand vom freien Ende des Wischerarms zu dem Ansatz.

In Weiterbildung der Erfindung ist vorgesehen, daß in Längsrichtung des Wischblatts gesehen die Lagerbohrung nahe dem einen Ende des Kupplungsteils in diesem angeordnet ist und daß weiter das Kupplungsteil zumindest im Bereich des Ansatzes und bezogen auf das Tragelement niedriger ist als im Bereich der Lagerbohrung. Der Ansatz kann also dort angeordnet werden, wo das Kupplungsteil niedriger ist, so daß durch die Anordnung des Ansatzes im Querungsbereich keine Vergrößerung der Bauhöhe nötig ist, ohne daß deshalb die Stabilität des Kupplungsteils im Bereich der hochbelasteten Lagerbohrung leidet.

Zweckmäßig wird dieser niedrige Bereich des Kupplungsteils dadurch erreicht, daß dieses im Bereich des am Wischerarm angeordneten Ansatzes mit einer zur vom Tragelement abgewandten Oberseite hin offenen Nut versehen ist, in welcher der Ansatz das Kupplungsteil quert.

Wenn der Wischerarm zusammen mit dem Wischblatt beispielsweise zum Austausch des Wischblatts von der Scheibe weggeklappt werden muß kann ein unkontrolliertes Lösen des Wischblatts vom Wischerarm dadurch verhindert werden, daß in Längsrichtung des Wischblatts gemessen der Abstand der Lagerbohrung über die Quernut bis zum einen Ende des Wischblatts größer ist als zum anderen Ende des Wischblatts. Dadurch wird die neben dem Wischerarm liegende Hälfte des Wischblatts wegen des verlagerten Schwerpunktes gegen den Ansatz gedreht so daß das Wischblatt zwischen dem Schenkel des Ansatzes und dem Wischerarm beziehungsweise dessen Schwenkhebel selbsttätig zum liegen kommt und dort gesichert ist. Ein unbeabsichtigtes Lösen des Wischblatts vom Wischerarm ist somit nicht möglich, weil dazu das Wischblatt gegenüber dem Wischerarm so geschwenkt werden muß, daß dieses aus dem Sicherungsbereich des Schenkels gelangt.

Eine besonders einfache Ausbildung der Paßbereiche des Wischblatts ist gegeben, wenn diese an den beiden einander gegenüberliegenden Längsseiten des Kupplungsteil ausgebildet sind.

Zur Minimierung des Seitenspiels zwischen Wischblatt und den Stützbereichen des Wischerarms ist in Richtung der Gelenkachse gemessen der Abstand zwischen den Paßbereichen des Wischblatts auf den Abstand zwischen den Stützbereichen des Wischerarms abgestimmt, weil dadurch die Seitenwände der Nut zumindest ein Teil der auf das Wischblatt einwirkenden Kräfte - die sich beispielsweise aufgrund unterschiedlicher Verschmutzung der Scheibe ergeben können - aufnehmen und somit den Gelenkbolzen bzw. den Lagerbolzen entlasten.

Eine Führungshilfe für das Wischblatt und damit ein besonders ruhiger Wischbetrieb kann erreicht werden, wenn in Längsrichtung des Wischblatts gemessen die Breite des Ansatzes auf die Breite der Nut abgestimmt ist.

Bei einem Wischerarm, der zumindest im Bereich des Gelenkbolzens einen U-förmigen Querschnitt hat, dessen U-Schenkel zur Scheibe gerichtet sind und kann eine einfache Befestigung des Gelenkbolzens dadurch erreicht werden, daß der Gelenkbolzen den dem Wischblatt benachbarten U-Schenkel in einer Ausnehmung durchdringt und am anderen U-Schenkel befestigt ist.

Vorteile bei der Lagerhaltung für die Wischvorrichtung können sich dadurch ergeben, daß an dem freien Ende des Wischerarms bzw. des Schwenkhebels ein separates Anschlußstück befestigt ist, welches sowohl den Gelenkbolzen als auch die Sicherungsmittel für das Wischblatt aufweist.

Wenn der Wischerarm, beziehungsweise dessen Schwenkhebel als Spritzgußteil ausgebildet ist, kann der Gelenkbolzen auf einfache Weise dadurch mit dem Wischerarm beziehungsweise mit dem Schwenkhebel verbunden sein, daß dieser mit seinem einen Ende in den Wischerarm eingeformt ist.

Nach den Ansprüchen 13 und 14 betrifft die Erfindung einen Wischerarm bzw. ein Wischblatt für eine derartige Wischvorrichtung.

Weitere vorteilhafte Weiterbildungen und Ausgestaltungen der Erfindung sind in der nachfolgenden Beschreibung von in der dazugehörigen Zeichnung dargestellten Ausführungsbeispielen angegeben.

Zeichnung

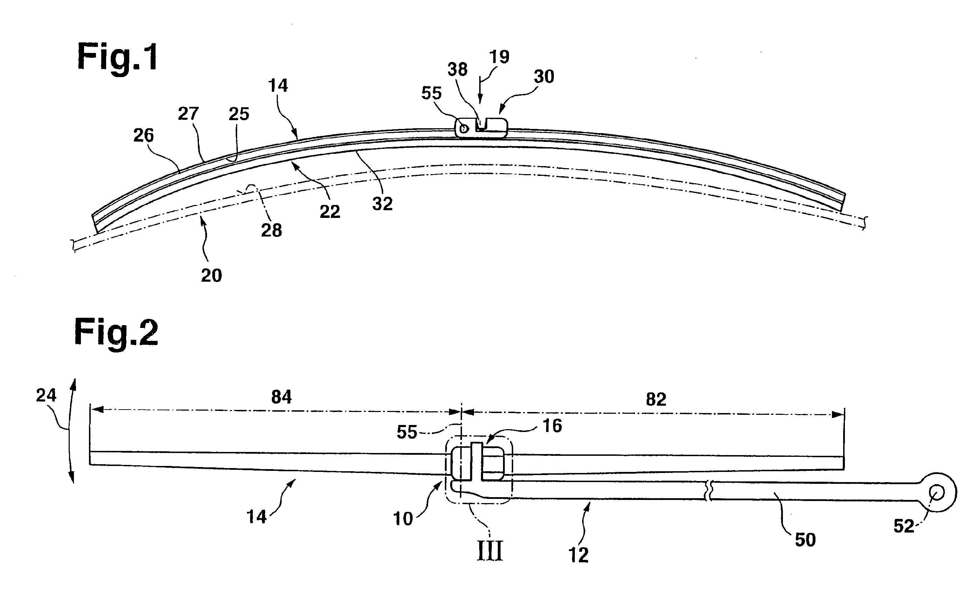

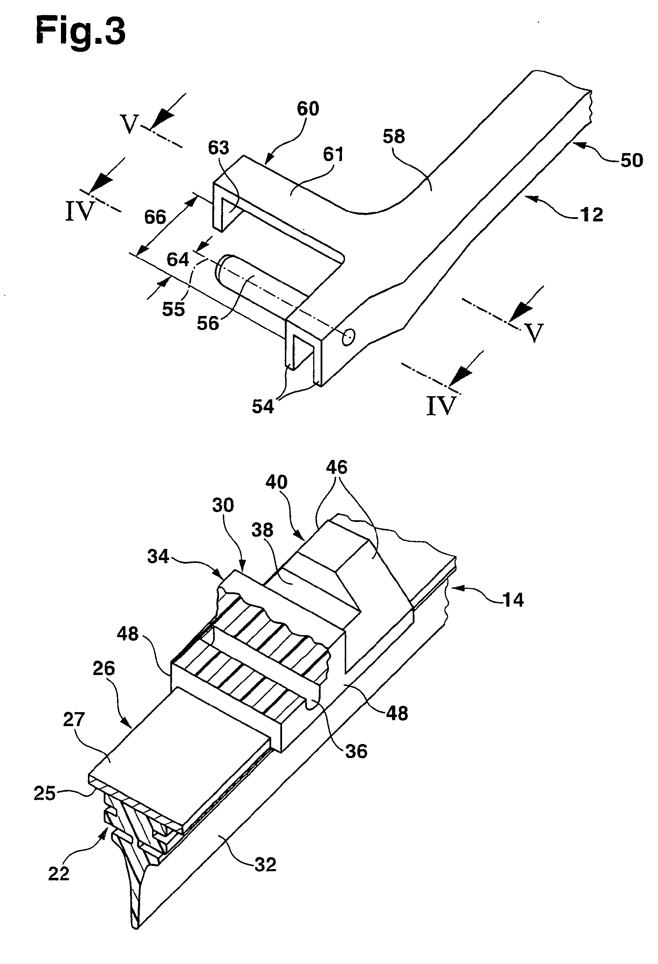

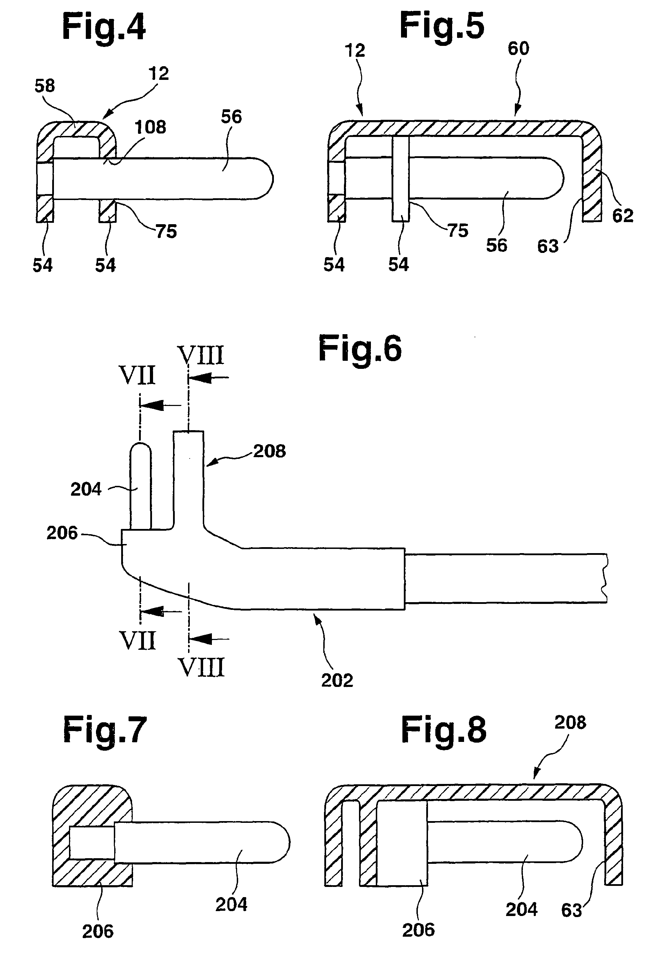

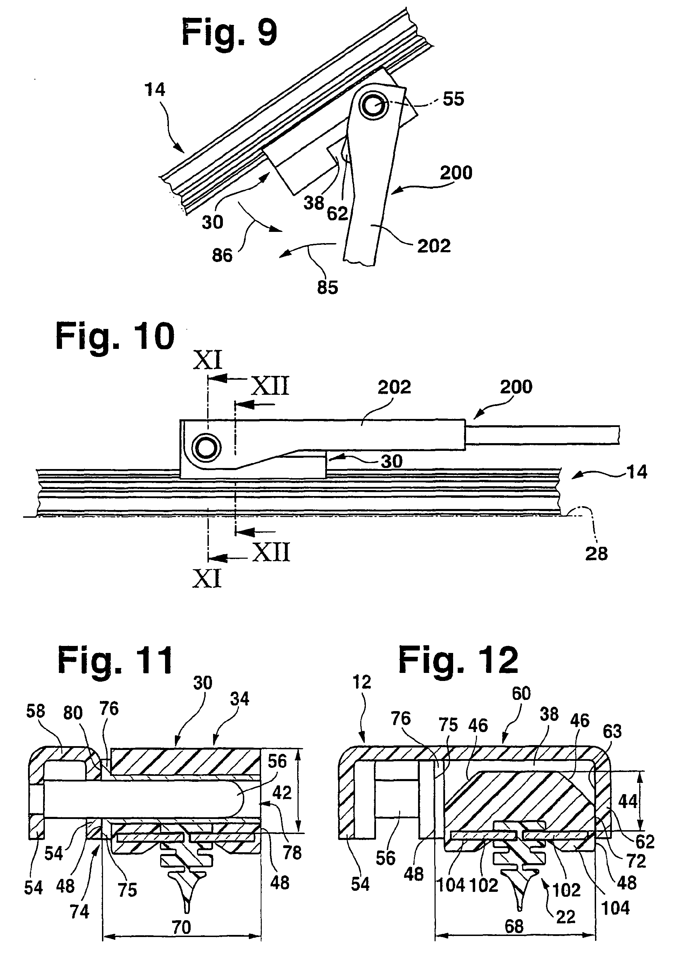

In der Zeichnung zeigen: Figur 1 ein zur erfindungsgemäßen Wischvorrichtung gehörendes Wischblatt in Seitenansicht, Figur 2 eine Draufsicht auf die Wischvorrichtung mit dem Wischblatt gemäß Figur 1, Figur 3 perspektivische Darstellungen einer in Figur 2 mit III bezeichneten Einzelheit der Wischvorrichtung vergrößert gezeichnet, Figur 4 einen Schnitt entlang der Linie IV-IV durch den Wischerarm gemäß Figur 3, entsprechend gedreht gezeichnet, Figur 5 einen Schnitt entlang der Linie V-V durch den Wischerarm gemäß Figur 3 entsprechend gedreht gezeichnet, Figur 6 eine Draufsicht auf das als Spritzgußteil gefertigte freie Ende einer möglichen Ausführung des Wischerarms, Figur 7 einen Schnitt entlang der Linie VII-VII durch den Wischerarm gemäß Figur 6 entsprechend gedreht dargestellt, Figur 8 einen Schnitt entlang der Linie VIII-VIII durch den Wischerarm gemäß Figur 6 entsprechend gedreht dargestellt, Figur 9 eine unmaßstäbliche Teildarstellung des mit einem Wischblatt verbundenen Wischerarms, wobei der Wischerarm zusammen mit dem Wischblatt in eine Montageposition von der Scheibe weggeklappt ist, Figur 10 die Anordnung gemäß Figur 9 in Betriebsposition, Figur 11 einen Schnitt entlang der Linie XI-XI durch die Wischvorrichtung gemäß Figur 10 in vergrößerter Darstellung und Figur 12 einen Schnitt entlang der Linie XII-XII durch die Wischvorrichtung gemäß Figur 10 in vergrößerter Darstellung.

### Beschreibung der Ausführungsbeispiele

Zu einer in Figur 2 dargestellten Wischvorrichtung 10 für Windschutzscheiben von Kraftfahrzeugen gehören ein an einer Kraftfahrzeug-Karrosserie geführter, angetriebene Wischerarm 12 an dessen freien Ende ein Wischblatt 14 angelenkt ist. Die gelenkige Verbindung zwischen dem Wischerarm 12 und dem Wischblatt 14 wird durch eine entsprechend ausgebildete Anschlußvorrichtung 16 bewerkstelligt. Der Wischerarm 12 und damit auch das Wischblatt 14 sind in Richtung des Pfeiles 19 zur in Figur 1 strichpunktiert angedeuteten Scheibe 20 eines Kraftfahrzeuges belastet, an welcher eine zum Wischblatt 14 gehörende, langgestreckte, gummielastische Wischleiste 22 anlegbar ist. In dieser dann erreichten Betriebsposition wird das Wischblatt in Richtung des Doppelpfeiles 24 (Figur 2) über die Scheibe verschoben, um deren Oberfläche 28 zu reinigen. Das Wischblatt 14 ist jedoch in Figur 1 in einer Position dargestellt, in der lediglich seine beiden Enden die Scheibe 20 berühren. Die Wischleiste 22 des Wischblatts 14 ist längsachsenparallel an der einen, der Scheibe zugewandten Bandseite 25 eines einteiligen, bandförmigen Tragelements 26 angeordnet. An der anderen, von der Scheibe 20 abgewandten Bandseite 27 des Tragelements 26 ist an dessen Mittelabschnitt ein zur Anschlußvorrichtung 16 gehörendes, wischblattseitiges Vorrichtungsteil 30 befestigt. Wie aus Figur 1 zu entnehmen ist, ist das Wischblatt in seiner dargestellten Position, in welcher es noch nicht über seine gesamte Länge an der Scheibe 20 angelegt ist, stärker gekrümmt als die Scheibe. Da in Figur 1 die stärkste Krümmung der Scheibenoberfläche 28 dargestellt ist, ist klar ersichtlich, daß die Krümmung des mit seinen beiden Enden an der Scheibe 20 anliegenden Wischblatts 14 stärker ist als die maximale Scheibenkrümmung. Unter dem Anpressdruck (Pfeil 19), legt sich das Wischblatt mit seiner Wischlippe 32 über deren gesamten Länge an der zu wischenden Scheibenoberfläche 28 an. Dabei baut sich im elastischen Tragelement 26 eine Spannung auf, welche für eine ordnungsgemäße Anlage der Wischleiste 22 beziehungsweise der Wischlippe 32 über deren gesamte Länge an der Scheibe 20 sorgt. Weil die in aller Regel sphärisch gekrümmte Scheibe nicht ein Abschnitt einer Kugeloberfläche darstellt, muß sich das Wischblatt 14 gegenüber dem Wischerarm 12 während seiner Wischbewegung (Doppelpfeil 24) ständig der jeweiligen Lage der Scheibenoberfläche anpassen können. Deshalb ist die Anschlußvorrichtung 16 gleichzeitig als Gelenkverbindung zwischen Wischblatt 14 und Wischerarm 12 ausgebildet.

Im Folgenden soll auf zwei Ausführungsbeispiele der Verbindung zwischen Wischblatt und Wischerarm näher eingegangen werden. Aus Figur 3 ist ersichtlich, daß das Wischblatt 14 ein einteiliges, bandförmiges Tragelement 26 aufweist. In dem hier dargestellten Mittelabschnitt des Wischblatts sitzt das wischblattseitige Vorrichtungs - oder Kupplungsteil 30, mit dessen Hilfe das Wischblatt 14 mit dem Wischerarm 12 gelenkig verbunden werden kann. Das beim Ausführungsbeispiel aus Kunststoff hergestellte Vorrichtungsteil 30 ist fest mit dem Wischblatt beziehungsweise mit dessen Tragelement 26 verbunden. Es hat einen blockförmigen Abschnitt 34, in welchem eine als Sackloch ausgebildete Lagerbohrung 36 angeordnet ist. Die Lagerbohrung 36 befindet sich im blockförmigen Abschnitt 34 des Kupplungsteils und zwar nahe dessen einen Längsende. Zum anderen Längsende schließt sich an den Abschnitt 34 des Vorrichtungsteils 30 eine quer zur Längserstreckung des Wischblatts 14 verlaufene Nut 38 an die zu der vom Tragelement 26 abgewandten Oberseite hin offen ist. Der zum anderen Ende des Vorrichtungsteils 30 hin sich an die Quernut 38 anschließende Endabschnitt 40 hat ebenfalls eine blockartige Gestalt, ist jedoch nicht so hoch wie der Abschnitt 26 mit der Lagerbohrung 36. Daraus folgt, daß bezogen auf die Oberseite 27 des Tragelements 26 der Abschnitt 34 des Vorrichtungsteils 30 die größte Höhe hat. Diese Höhe ist in Figur 11 mit der Bezugszahl 42 versehen. Seine geringste Höhe hat das Vorrichtungsteil 30 im Bereich der Quernut 38 beziehungsweise des Nutgrundes. Dieses Maß ist in Figur 12 mit der Bezugszahl 44 bezeichnet worden. Die Höhe des Abschnitts 40 entspricht am Ausführungsbeispiel der Höhe 42 des Abschnitts 34. Es ist aber auch durchaus denkbar das Höhenmaß 44 aus dem Nutbereich über den Abschnitt 40 des Vorrichtungsteils 30 beizubehalten, so daß anstelle der Nut 38 ein Absatz entsteht. Weiter ist das Vorrichtungsteil 30 im Bereich seines Abschnitts 40 über die Quernut 38 hinaus mit Schrägflächen 46 versehen. Die Schrägflächen 46 sind jedoch so bemessen, daß über die gesamte Längserstreckung des Vorrichtungsteils 30 an dessen beiden einander gegenüberliegenden Längsseiten Seitenwangen 48 verbleiben, die sich vom Abschnitt 34 aus über die Quernut 38 bis zum Ende des Abschnitts 40 des Vorrichtungsteils 30 erstrecken (Figur 3).

Weiter zeigt Figur 3 das freie, anschlußseitige Ende des Wischerarms 12, der bei dieser Ausführungsform als spanlos geformtes Blechteil ausgebildet ist. Er hat einen Schwenkhebel 50, der sich von einer Lagerstelle 52 (Figur 2) an der Kraftfahrzeug-Karrosserie aus erstreckt und zumindest über weite Bereiche einen U-förmigen Querschnitt hat. Die U-Schenkel 54 des Schwenkhebels 50 sind zur zu wischenden Scheibe 20 gerichtet. Nahe seinem freien, von der Lagerstelle 52 abliegenden Ende weist der Schwenkhebel einen eine glatte Mantelfläche aufweisenden Gelenkbolzen 56 auf, dessen Gelenkachse 55 sich im wesentlichen in Bewegungsrichtung des Wischerarms (Doppelpfeil 24 in Figur 2) erstreckt. Der Durchmesser des Gelenkbolzens 56 ist so auf den Durchmesser der Lagerbohrung 36 im Vorrichtungsteil 30 abgestimmt, daß sich eine möglichst spiellose leichtgängige Passung ergibt, welche dem Wischblatt 14 eine ungehemmte Schwingbewegung um die Gelenkachse 55 des Gelenkbolzens 56 erlaubt. Wie weiter aus Figur 3 ersichtlich ist, erstreckt sich die U-Basis 58 des Schwenkhebels 50 mit einem L-förmigen Ansatz 60 über den einen U-Schenkel 54 hinaus, wobei der mit der U-Basis 58 verbundene eine L-Schenkel 61 quer zur Erstreckung des Schwenkhebels 50 ausgerichtet ist. Der andere L-Schenkel 62 ist zur Scheibe 20 ausgerichtet. Der Abstand 64 vom freien Ende des Wischerarms 12 bzw. des Schwenkhebels 50 zur Gelenkachse 55 ist kleiner als der Abstand 66 vom freien Ende des Wischerarms bzw. des Schwenkhebels 50 zu dem L-förmigen Ansatz 60.

Wenn das Wischblatt 14 gemäß Figur 3 an das Anschlußende des Wischerarms 12 (Figur 3) angebracht werden soll, ist zunächst der Wischerarm 200 in eine Position - entgegen dem Pfeil 85 von der Scheibe 20 weggeklappt - zu bringen, die in Figur 9 dargestellt ist. Weiter muß dann das Wischblatt 14 die in Figur 9 dargestellte Position zum Wischerarm einnehmen, in welcher der L-Schenkel 62 des zum Wischerarm 12 gehörenden L-förmigen Ansatzes 60 die aus Figur 9 ersichtliche Position zur Quernut 38 des zum Wischblatt 14 gehörenden Vorrichtungsteils 30 einnimmt. Für eine entsprechende Abstimmung des Abstandes der Gelenkachse zu den beiden Nut-Seitenwänden einerseits zu dem Abstand von der Gelenkachse zu den Seitenkanten des mit dem Schwenkhebel 50 des Wischerarms 12 verbundenen einen L-Schenkels 61 ist Sorge zu tragen. Wenn die in Figur 9 dargestellte Montageposition zwischen Wischerarm 200 und Wischblatt 14 hergestellt ist, kann das Wischblatt 14 in Richtung der Gelenkachse 55 auf den Gelenkbolzen 56 des Wischerarms aufgeschoben werden, bis die die Mündung der Lagerbohrung 36 aufweisende Seitenwange 48 am Wischerarm beziehungsweise an einer wischerarmfesten Schulter zur Anlage kommt. In dieser Montage-Zwischenstellung kann das Wischblatt 14 gegenüber dem Wischerarm 200 in Richtung des Pfeiles 86 (Figur 9) so verdreht werden, wie dies in Figur 10 dargestellt ist. Danach kann auch der Wischerarm in Richtung des Pfeils 85 zurückgeklappt (Figur 9) und damit in seine Betriebsposition gebracht werden, in welcher das Wischblatt 14 an der zu wischenden Oberfläche 28 der Scheibe 20 anliegt (Figur 10). Die Relativbewegung zwischen dem Wischerarm und dem Wischblatt ist deshalb möglich, weil der Abstand 68 (Figur 12) zwischen der dem Wischerarm 12 zugewandten Innenseite des Schenkels 62 auf ein Maß 70 abgestimmt ist, welches sich am Wischblatt beziehungsweise beim Ausführungsbeispiel am Vorrichtungsteil 30 in Richtung der Gelenkachse 55 gemessen ergibt. Dabei müssen sich die beiden Meßstellen nicht unbedingt einander gegenüberliegen. Beim Ausführungsbeispiel ist der eine Meßbereich 72 an der Seitenwange 48 des Vorrichtungsteil 30 ausgebildet, welcher bei am Wischerarm montiertem Wischblatt der Innenseite des L-Schenkels 62 direkt benachbart ist. Der andere Meßbereich 74 ist beim Ausführungsbeispiel gemäß Figur 11 durch den Ringbund 76 einer Lagerbuchse 78 gebildet, deren Bohrung die Lagerfunktion für den Gelenkbolzen 56 übernimmt und die ihrerseits fest im Vorrichtungsteil 30 sitzt. Die äußere Stirnwand 80 des Ringbundes 76 gilt hierbei als Bezugsstelle für den Meßbereich 74.

Bei der Ausgestaltung des Vorrichtungsteil 30 gemäß Figur 3 sind die entsprechenden Meßstellen für das Maß 70 durch die beiden Längsseiten beziehungsweise Seitenwangen 48 des Vorrichtungsteils 30 selbst gebildet. Wichtig ist, daß bei der in den Figuren 11 und 12 dargestellten Betriebsstellung der Wischvorrichtung die eine Seitenwange 48 des Wischblatts, beziehungsweise die Meßbereiche 72 und 74 des Wischblatts, der Innenseite 63 des L-Schenkels 62 beziehungsweise dem an Wischerarm 12 ausgebildeten Meßbereich 75 für das Abstandsmaß 68 direkt benachbart gegenüberliegen. Der L-Schenkel 62 beziehungsweise dessen dem Wischerarm zugekehrte Innenwand 63 bildet zusammen mit der dieser Innenwand zugewandten Meßstelle 75 am Wischerarm Stützbereiche die in Wischrichtung mit Abstand 68 voneinander angeordnet und gegeneinander gerichtet sind. Zwischen diesen Stützbereichen 63 und 75 des Wischerarms liegen voneinander wegweisende Paßbereiche 72, 74 des Wischblatts, die durch die Stirnwand 80 des Ringbundes 76 beziehungsweise an den Seitenwangen 48 des Vorrichtungsteils 30 ausgebildet sind. Aus den Figuren 2 und 3 ist entnehmbar, daß in Längsrichtung des Wischblatts 14 gemessen der Abstand 82 der Lagerbohrung bzw. der Gelenkachse 55 über die Quernut 38 bis zum einen Ende des Wischblatts größer ist als der Abstand 84 von der Gelenkachse 55 zum anderen Ende des Wischblatts. Durch den so festgelegten, verschobenen Schwerpunkt zum einen Wischblattende hin ergibt sich bei der entgegen dem Pfeil 85 in Figur 9 von der Scheibe 20 weggeklappten Wischvorrichtung 10 ein Moment, welches das Wischblatt um die Gelenkachse 55 in Richtung des Pfeiles 86 dreht, so daß dieses mit den Seitenwangen 48 des Vorrichtungsteils 30 stets zwischen den Sicherungsmitteln 63, 75 des Wischerarms 12 verbleibt und dadurch gegen unbeabsichtigtes Lösen vom Wischerarm gesichert ist.

Durch die zwingend vorgegebene Betriebslage des Wischblatts 14 zwischen den Sicherungsmitteln des Wischerarms wird eine Fehlmontage sicher vermieden, da widrigenfalls die visuell klar erkennbare Betriebsposition zwischen Wischerarm und Wischblatt nicht erreicht werden kann.

Die Anordnung der Lagerbuchse 78 anstelle der Sackbohrung 36 gemäß Figur 3 kann Vorteile hinsichtlich der Gleitpartnerabstimmung bringen.

Zu der Ausgestaltung gemäß den Figuren 11 und 12 ist noch zu bemerken, daß dort das Wischblatt nicht mit einem einstückigen Tragelement versehen ist sondern daß dieses aus zwei Teilschienen 102 besteht, welche in Längsnuten 104 der Wischleiste 106 liegen. Die Teilschienen 102 sind in ihren Längsnuten 104 dadurch gesichert, daß das Vorrichtungsteil 30 die voneinander abgewandten Längskanten der Teilschienen klammerartig über- und untergreift. Weiter zeigen die Figuren 4, 5, 11 und 12, daß bei einem aus einem Blech gefertigten, im Querschnitt U-förmigen Wischerarm 12, dessen U-Schenkel 54 zur Scheibe 20 gerichtet sind, der Gelenkbolzen 56 in dem dem Wischblatt 14 benachbarten U-Schenkel 54 in einer Ausnehmung 108 durchdringt und am anderen U-Schenkel 54 befestigt vorzugsweise vernietet oder verschweißt ist.

Bei einer anderen, in den Figuren 6 bis 10 dargestellten Ausführungsform des Wischerarms 12 ist dieser an seinem freien Ende mit einem separaten, gieß- oder spritztechnisch gefertigten Anschlußstück 202 versehen, welches sowohl den Gelenkbolzen 204 als auch die Sicherungsmittel 208 für den Wischblatt aufweist. Dabei ist der Gelenkbolzen in das freie, massiv ausgebildete Endstück 206 des Wischerarms eingeformt. Bei dieser Ausführungsform ist klar, daß auch der L-förmige Ansatz 208 direkt an das Anschlußstück 202 angeformt ist. Die Anordnung und Ausgestaltung des Gelenkbolzens 204 und des L-förmigen Ansatzes 208 für sich und in bezug aufeinander entspricht völlig der anhand der Figuren 3 und 12 erläuterten Ausführungsform der Erfindung.

Zur Verbesserung der Führung des Wischblatts am Wischerarm und zur Entlastung der Lagermittel 36 beziehungsweise 56 des Wischerarms und des Wischblatts kann es von Vorteil sein, wenn die in Längserstreckung des Wischerarms gemessene Breite des einen L-Schenkels 61 und die Breite der Quernut 38 passend aufeinander abgestimmt sind.

Beiden Ausführungsbeispielen ist gemeinsam, daß die Sicherungsmittel für das Wischblatt 14 am Wischerarm 12 angeordnet sind und auf der von diesem abgewandten Seite des Wischblatts mit einem wischblattseitigen Anschlag zusammenwirken, der durch die Innenwand des anderen L-Schenkels 62 gebildet ist. Es ist klar, daß die Sicherung des Wischblatts auf dem Gelenkbolzen zur anderen Seite hin durch den Wischerarm selbst übernommen wird, weil der Gelenkbolzen an diesem Wischerarm befestigt ist.

## Patentansprüche

1. Wischvorrichtung (10) für Scheiben von Kraftfahrzeugen mit einem am Kraftfahrzeug geführten, angetriebenen, zwischen Umkehrlagen bewegbaren Wischerarm (12), an dessen freien Ende ein einendig an diesem gehaltener Gelenkbolzen (56) angeordnet ist, dessen Gelenkachse (55) sich quer zur Wischerarm-Längsachse und im wesentlichen in Bewegungsrichtung des Wischerarms erstreckt und auf dem Gelenkbolzen ein um die Gelenkachse (55) schwingbares Wischblatt (14) gelagert ist, wobei die Wischvorrichtung Mittel zum Sichern des Wischblatts auf dem Gelenkbolzen (56) aufweist, wobei die Sicherungsmittel (60) am Wischerarm (12) angeordnet sind und auf der von diesem abgewandten Seite des Wischblatts (14) mit einem wischblattseitigen Anschlag (62, 63) zusammenwirken, **dadurch gekennzeichnet, dass** die Sicherungsmittel (63, 75) des Wischerarms (12) durch an diesem ausgebildete, in Wischrichtung (24) mit Abstand voneinander angeordnete, gegeneinander gerichtete Stützbereiche (62, 75) gebildet sind, zwischen denen voneinander wegweisende Paßbereiche (48 bzw. 80) des Wischblatts (14) angeordnet sind und dass der eine Stützbereich (75) an einem Schwenkhebel (50) des Wischerarms (12) angeordnet ist und dass der Schwenkhebel einen in Richtung der Erstreckung der Gelenkachse (55) vorspringenden, das Wischblatt querenden Ansatz (60) aufweist, an dessen freien Ende ein zur Scheibe gerichteter Schenkel (62) angeordnet ist, dessen dem Schwenkhebel zugewandte Seite (63) den anderen Stützbereich bildet.

2. Wischvorrichtung nach Anspruch 1, **dadurch gekennzeichnet, dass** das Wischblatt (14) ein bandartig langgestrecktes, aus einem federelastischen Material gefertigten Tragelement (26) für eine auf der zu wischenden Scheibe (20) anlegbare Wischleiste (22) hat, an dessen von der Scheibe abgewandten, oberen Bandfläche (27) ein zu einer Anschlussvorrichtung (16) gehörendes, die Lagerausnehmung (36) für den Gelenkbolzen (56) aufweisendes Kupplungsteil (30) angeordnet ist.

3. Wischvorrichtung nach einem der Ansprüche 1 oder 2, **dadurch gekennzeichnet, dass** der Abstand (64) vom freien Ende des Wischerarms zur Gelenkachse kleiner ist als der Abstand (66) vom freien Ende des Wischerarms zu dem Ansatz (60).

4. Wischvorrichtung nach Anspruch 3, **dadurch gekennzeichnet, dass** in Längsrichtung des Wischblatts (14) gesehen die Lagerbohrung (36) nahe dem einen Ende des Kupplungsteils (30) in diesem angeordnet ist und dass das Kupplungsteil zumindest im Bereich des Ansatzes (60) und bezogen auf das Tragelement (26) niedriger ist als im Bereich der Lagerbohrung (36).

5. Wischvorrichtung nach Anspruch 4, **dadurch gekennzeichnet, dass** das Kupplungsteil (30) im Bereich des am Wischerarm angeordneten Ansatzes (60) mit einer zur vom Tragelement (26) abgewandten Oberseite hin offenen Nut (38) versehen ist, in welcher der Ansatz (60) das Kupplungsteil (30) quert.

6. Wischvorrichtung nach Anspruch 5, **dadurch gekennzeichnet, dass** in Längsrichtung des Wischblatts (14) gemessen der Abstand (82) der Lagerbohrung (36) über die Quernut (38) bis hin zum einen Ende des Wischblatts (14) größer ist als zum anderen Ende des Wischblatts.

7. Wischvorrichtung nach einem der Ansprüche 1 bis 6, **dadurch gekennzeichnet, dass** die Paßbereiche (72, 74) des Wischblatts (14) an den beiden einander gegenüberliegenden Längsseiten (48) des Kupplungsteils (30) ausgebildet sind.

8. Wischvorrichtung nach Anspruch 7, **dadurch gekennzeichnet, dass** in Richtung der Gelenkachse (55) gemessen der Abstand (70) zwischen den Paßbereichen des Wischblatts auf den Abstand (68) zwischen den Stützbereichen (63, 75) des Wischerarms abgestimmt ist.

9. Wischvorrichtung nach einem der Ansprüche 5 bis 8, **dadurch gekennzeichnet, dass** in Längsrichtung des Wischblatts gemessen die Breite des Ansatzes (60) auf die Breite der Quernut (38) abgestimmt ist.

10. Wischvorrichtung nach einem der Ansprüche 1 bis 9, **dadurch gekennzeichnet, dass** der Wischerarm zumindest im Bereich des Gelenkbolzens (56) einen U-förmigen Querschnitt hat, dessen U-Schenkel (54) zur Scheibe (20) gerichtet sind und dass der Gelenkbolzen (56) den dem Wischblatt benachbarten U-Schenkel in einer Ausnehmung (108) durchdringt und am anderen U-Schenkel (54) befestigt ist.

11. Wischvorrichtung nach einem der Ansprüche 1 bis 10, **dadurch gekennzeichnet, dass** wenigstens ein Abschnitt (202) des Wischerarms (200) als Spritzgussteil ausgebildet ist und dass der Gelenkbolzen (204) mit seinem einen Ende in den Wischerarm eingeformt ist.

12. Wischvorrichtung nach einem der Ansprüche 1 bis 10, **dadurch gekennzeichnet, dass** an dem freien Ende des Wischerarms beziehungsweise des Schwenkhebels ein separates Anschlussstück (202) befestigt ist, welches sowohl den Gelenkbolzen (204) als auch die Sicherungsmittel (208) für das Wischblatt (14) aufweist.

13. Wischerarm für eine Wischvorrichtung nach einem der Ansprüche 1 bis 12, **dadurch gekennzeichnet, dass** am freien Ende ein einendig an diesem gehaltener Gelenkbolzen (56) angeordnet ist, dessen Gelenkachse (55) sich quer zur Wischerarm-Längsachse und im wesentlichen in Bewegungsrichtung des Wischerarms erstreckt und auf dem Gelenkbolzen ein um die Gelenkachse (55) schwingbares Wischblatt (14) lagerbar ist, dass Sicherungsmittel (60) am Wischerarm (12) angeordnet sind zum Zusammenwirken mit einem wischblattseitigen Anschlag (62, 63), dass die Sicherungsmittel (63, 75) durch ausgebildete, in Wischrichtung (24) mit Abstand voneinander angeordnete, gegeneinander gerichtete Stützbereiche (62, 75) gebildet sind, zwischen denen voneinander wegweisende Paßbereiche (48 bzw. 80) des Wischblatts (14) anordenbar sind und dass der eine Stützbereich (75) an einem Schwenkhebel (50) des Wischerarms (12) angeordnet ist und dass der Schwenkhebel einen in Richtung der Erstreckung der Gelenkachse (55) vorspringenden, das Wischblatt querenden Ansatz (60) aufweist, an dessen freien Ende ein zur Scheibe gerichteter Schenkel (62) angeordnet ist, dessen dem Schwenkhebel zugewandte Seite (63) den anderen Stützbereich bildet.

14. Wischblatt für eine Wischvorrichtung nach einem der Ansprüche 1 bis 12, mit einem in einem Mittelabschnitt des Wischblatts sitzenden wischblattseitigen Kupplungsteil (30) zum gelenkigen Verbinden mit einem Wischerarm (12), **dadurch gekennzeichnet, dass** das Kupplungsteil (30) aus Kunststoff hergestellt und fest mit einem Tragelement (26) des Wischblatts verbunden ist und einen blockförmigen Abschnitt (34) aufweist, in welchem eine Lagerbohrung (36) angeordnet ist.

15. Wischblatt nach Anspruch 14, **dadurch gekennzeichnet, dass** das Tragelement (26) aus zwei Teilschienen (102) besteht, welche in Längsnuten (104) der Wischleiste (106) liegen und in ihren Längsnuten 104 **dadurch** gesichert sind, dass das Kupplungsteil (30) die voneinander abgewandten Längskanten der Teilschienen (102) klammerartig über- und untergreift.

## Claims

1. Wiper device (10) for windshields of motor vehicles, having a driven wiper arm (12) which is guided on the motor vehicle and is movable between reversal positions, and on the free end of which a pivot pin (56) is arranged and is held at one end on said wiper arm (12), the pivot axis (55) of which pivot pin (56) extends transversely to the wiper-arm longitudinal axis and essentially in the direction of movement of the wiper arm, and a wiper blade (14) which can swing about the pivot axis (55) is mounted on the pivot pin, the wiper device having means for securing the wiper blade on the pivot pin (56), the securing means (60) being arranged on the wiper arm (12) and interacting on that side of the wiper blade (14) which faces away from the latter with a wiper-blade-side stop (62, 63), **characterized in that** the securing means (63, 75) of the wiper arm (12) are formed by supporting regions (62, 75) which are formed on the latter, are arranged at a distance from one another in the wiping direction (24) and are directed toward one another, and between which fitting regions (48 and 80 resp.) of the wiper blade (14) which point away from one another are arranged, and **in that** one supporting region (75) is arranged on a pivoted lever (50) of the wiper arm (12), and **in that** the pivoted lever has an extension (60) which projects in the direction of the extent of the pivot axis (55) and crosses the wiper blade, and on the free end of which a leg (62) directed toward the windshield is arranged, that side (63) of said leg (62) which faces the pivoted lever forming the other supporting region.

2. Wiper device according to Claim 1, **characterized in that** the wiper blade (14) has a supporting element (26) which is elongated in a band-like manner, is produced from an elastic material and is intended for a wiper strip (22), which can be brought into contact with the windshield (20) to be wiped, and on whose top band surface (27) facing away from the windshield a coupling part (30) belonging to a connection device (16) and having the bearing aperture (36) for the pivot pin (56) is arranged.

3. Wiper device according to Claim 1 or 2, **characterized in that** the distance (64) from the free end of the wiper arm to the pivot axis is less than the distance (66) from the free end of the wiper arm to the extension (60).

4. Wiper device according to Claim 3, **characterized in that** the bearing bore (36), as viewed in the longitudinal direction of the wiper blade (14), is arranged in the coupling part (30) close to one end of the latter, and **in that** the coupling part is lower at least in the region of the extension (60) and with reference to the supporting element (26) than in the region of the bearing bore (36).

5. Wiper device according to Claim 4, **characterized in that** the coupling part (30), in the region of the extension (60) arranged on the wiper arm, is provided with a groove (38), which is open toward the top side facing away from the supporting element (26) and in which the extension (60) crosses the coupling part (30).

6. Wiper device according to Claim 5, **characterized in that**, as measured in the longitudinal direction of the wiper blade (14), the distance (82) from the bearing bore (36) across the transverse groove (38) up to one end of the wiper blade (14) is greater than to the other end of the wiper blade.

7. Wiper device according to one of Claims 1 to 6, **characterized in that** the fitting regions (72, 74) of the wiper blade (14) are formed on the two longitudinal sides (48) of the coupling part (30) opposite one another.

8. Wiper device according to Claim 7, **characterized in that** the distance (70) between the fitting regions of the wiper blade, as measured in the direction of the pivot axis (55), is matched to the distance (68) between the supporting regions (63, 75) of the wiper arm.

9. Wiper device according to one of Claims 5 to 8, **characterized in that** the width of the extension (60), as measured in the longitudinal direction of the wiper blade, is matched to the width of the transverse groove (38).

10. Wiper device according to one of Claims 1 to 9, **characterized in that** the wiper arm, at least in the region of the pivot pin (56), has a U-shaped cross section, the U-legs (54) of which are directed toward the windshield (20), and **in that** the pivot pin (56) passes through the U-leg adjacent to the wiper blade in a recess (108) and is fastened to the other U-leg (54).

11. Wiper device according to one of Claims 1 to 10, **characterized in that** at least one section (202) of the wiper arm (200) is designed as an injection moulding, and **in that** the pivot pin (204) is formed with its one end in the wiper arm.

12. Wiper device according to one of Claims 1 to 10, **characterized in that** a separate connection piece (202) which has both the pivot pin (204) and the securing means (208) for the wiper blade (14) is fastened to the free end of the wiper arm or the pivoted lever.

13. Wiper arm for a wiper device according to one of Claims 1 to 12, **characterized in that** on the free end a pivot pin (56) is arranged and is held at one end on said wiper arm, the pivot axis (55) of which pivot pin (56) extends transversely to the wiper-arm longitudinal axis and essentially in the direction of movement of the wiper arm, and a wiper blade (14) which can swing about the pivot axis (55) can be mounted on the pivot pin, **in that** securing means (60) are arranged on the wiper arm (12) in order to interact with a wiper-blade-side stop (62, 63), **in that** the securing means (63, 75) are formed by supporting regions (62, 75) which are formed, are arranged at a distance from one another in the wiping direction (24) and are directed toward one another, and between which fitting regions (48 and 80 resp.) of the wiper blade (14) which point away from one another can be arranged, and **in that** one supporting region (75) is arranged on a pivoted lever (50) of the wiper arm (12), and **in that** the pivoted lever has an extension (60) which projects in the direction of the extent of the pivot axis (55) and crosses the wiper blade, and on the free end of which a leg (62) directed toward the windshield is arranged, that side (63) of said leg (62) which faces the pivoted lever forming the other supporting region.

14. Wiper blade for a wiper device according to one of Claims 1 to 12, having a wiper-blade-side coupling part (30), which is positioned in a central portion of the wiper blade, for pivoted connection to a wiper arm (12), **characterized in that** the coupling part (30) is produced from plastics material and is fixedly connected to a carrier element (26) of the wiper blade and has a block-like portion (34) in which a bearing aperture (36) is arranged.

15. Wiper blade according to Claim 14, **characterized in that** the carrier element (26) comprises two sectional rails (102) which lie in longitudinal grooves (104) of the wiper strip (106) and are secured in its longitudinal grooves (104) owing to the fact that the coupling part (30) engages like a clip over and under those longitudinal edges of the sectional rails (102) which are remote from one another.

## Revendications

1. Dispositif d'essuyage (10) de vitres de véhicules automobiles, comportant un bras d'essuie-glace (12) guidé par rapport au véhicule, entraîné entre des positions d'inversion et dont une extrémité libre comporte un goujon d'articulation (56) dont l'axe d'articulation (55) est dirigé transversalement à l'axe longitudinal du bras d'essuie-glace et s'étend pratiquement dans la direction de déplacement du bras d'essuie-glace, le goujon d'articulation recevant un balai d'essuie-glace (14) oscillant autour de l'axe d'articulation (55), le dispositif d'essuyage comportant pour fixer le balai d'essuie-glace sur l'axe d'articulation (55), des moyens de fixation (60) équipant le bras d'essuie-glace (12) et qui coopèrent avec une butée (62, 63) côté essuie-glace, du côté opposé du balai d'essuie-glace (14),
**caractérisé en ce que**
les moyens de fixation (63, 75) du bras d'essuie-glace (12) sont formés par des zones d'appui (62, 75) réalisées sur le bras d'essuie-glace, dirigées l'une contre l'autre et écartées l'une de l'autre dans la direction d'essuyage (24), et entre lesquelles se trouvent des zones d'ajustage (48, 80) écartées l'une de l'autre du balai d'essuie-glace (14), et
l'une des zones d'appui (75) est prévue sur le levier pivotant (50) du bras d'essuie-glace (12), et
le levier pivotant comporte un prolongement (60) dirigé dans l'extension de l'axe d'articulation (55), en saillie, en travers du balai d'essuie-glace, et dont l'extrémité libre comporte une branche (62) dirigée vers la vitre et dont le côté (63) tourné vers le levier pivotant forme l'autre zone d'appui.

2. Dispositif d'essuie-glace selon la revendication 1,
**caractérisé en ce que**
le balai d'essuie-glace (14) comporte un élément de support (26) allongé en forme de ruban, fabriqué en une matière élastique comme du ressort, pour une lame d'essuyage (22) destinée à s'appliquer contre la vitre (20) à essuyer et dont la surface de bande (27) supérieure non tournée vers la vitre, comporte une pièce d'accouplement (30), faisant partie d'un dispositif de raccordement (16), et comportant une cavité de palier (36) pour le goujon d'articulation (56).

3. Dispositif d'essuie-glace selon l'une des revendications 1 ou 2,
**caractérisé en ce que**
la distance (64) entre l'extrémité libre du bras d'essuie-glace et l'axe d'articulation est inférieure à la distance (66) entre l'extrémité libre du bras d'essuie-glace et le prolongement (60).

4. Dispositif d'essuie-glace selon la revendication 3,
**caractérisé en ce que**
vu dans la direction longitudinale du balai d'essuie-glace (14), le perçage de palier (36) est prévu à proximité d'une extrémité de la pièce d'accouplement (30) et cette pièce d'accouplement se trouve au moins dans la zone du prolongement (60) et, par rapport à l'élément de support (26), elle est plus basse que dans la zone du perçage de palier (36).

5. Dispositif d'essuie-glace selon la revendication 4,
**caractérisé en ce que**
la pièce d'accouplement (30) comporte au niveau du prolongement (60) du bras d'essuie-glace, une rainure (38) ouverte du côté opposé au côté supérieur de l'élément de support (26) et dans laquelle le prolongement (60) traverse la pièce d'accouplement (30).

6. Dispositif d'essuie-glace selon la revendication 5,
**caractérisé en ce que**
mesurée dans la direction longitudinale du balai d'essuie-glace (14), la distance (82) du perçage de palier (36) entre la rainure transversale (38) et l'extrémité du balai d'essuie-glace (14) est supérieure à la distance vers l'autre extrémité du balai d'essuie-glace.

7. Dispositif d'essuie-glace selon l'une des revendications 1 à 6,
**caractérisé en ce que**
les zones d'ajustage (72, 74) du balai d'essuie-glace (14) sont réalisées sur les deux grands côtés opposés (48) de la pièce d'accouplement (30).

8. Dispositif d'essuie-glace selon la revendication 7,
**caractérisé en ce que**
mesurée dans la direction de l'axe d'articulation (55), la distance (70) entre les zones d'ajustage du balai d'essuie-glace est définie suivant la distance (68) entre les zones d'appui (63, 75) du bras d'essuie-glace.

9. Dispositif d'essuie-glace selon l'une des revendications 5 à 8,
**caractérisé en ce que**
mesurée dans la direction longitudinale du balai d'essuie-glace, la largeur du prolongement (60) correspond à la largeur de la rainure transversale (38).

10. Dispositif d'essuie-glace selon l'une des revendications 1 à 9,
**caractérisé en ce qu'**
au moins dans la zone du goujon d'articulation (56), le bras d'essuie-glace a une section en forme de U dont la branche en U (54) est tournée vers la vitre (20) et le goujon d'articulation (56) traverse une cavité (108) de la branche en U voisine du balai d'essuie-glace et est fixé à l'autre branche en U (54).

11. Dispositif d'essuie-glace selon l'une des revendications 1 à 10,
**caractérisé par**
au moins un segment (202) du bras d'essuie-glace (200) réalisé comme pièce injectée alors que l'axe d'articulation (204) a une extrémité formée dans le bras d'essuie-glace.

12. Dispositif d'essuie-glace selon l'une des revendications 1 à 10,
**caractérisé en ce qu'**
une pièce de raccordement (202), séparée, est fixée à l'extrémité libre du bras d'essuie-glace ou du levier pivotant, cette pièce comportant à la fois l'axe d'articulation (204) et aussi le moyen de fixation (208) du balai d'essuie-glace (14).

13. Bras d'essuie-glace d'un dispositif d'essuie-glace selon l'une des revendications 1 à 12,
**caractérisé en ce que**
l'extrémité libre comporte un goujon d'articulation (56) fixé par une extrémité et dont l'axe d'articulation (55) s'étend transversalement à l'axe longitudinal du bras d'essuie-glace et principalement dans la direction de déplacement du bras d'essuie-glace et le goujon d'articulation (56) reçoit un balai d'essuie-glace (14) pivotant autour de l'axe d'articulation (55),
des moyens de fixation (60) étant prévus sur le bras d'essuie-glace (12) pour coopérer avec une butée (62, 63) côté balai d'essuie-glace,
les moyens de fixation (63, 75) étant écartés d'une distance dans la direction d'essuyage (24) en étant constitués par des zones d'appui (62, 75) tournées l'une vers l'autre et entre lesquelles se trouvent deux zones d'ajustage (48, 80) du balai d'essuie-glace (14), s'écartant l'une de l'autre, et
l'une des zones d'appui (75) est prévue sur un levier pivotant (50) du bras d'essuie-glace (12) et le levier pivotant comporte un prolongement (60) venant en saillie dans la direction d'extension de l'axe d'articulation (55), traversant le balai d'essuie-glace, et son extrémité libre comporte une branche (62) tournée vers la vitre dont le côté (63) tourné vers le levier pivotant forme l'autre zone d'appui.

14. Balai d'essuie-glace pour un dispositif d'essuyage selon l'une des revendications 1 à 12, comportant une pièce d'accouplement (30) côté balai d'essuie glace située dans le segment médian du balai d'essuie-glace pour une liaison articulée avec le bras d'essuie-glace (12),
**caractérisé en ce que**
la pièce d'accouplement (30) est fabriquée en matière plastique et est reliée solidairement à un élément support (26) du balai d'essuie-glace et comporte un segment (34) en forme de bloc muni d'un perçage de palier (36).

15. Balai d'essuie-glace selon la revendication 14,
**caractérisé en ce que**
l'élément de support (26) est formé de deux parties de rail (102) logées dans des rainures longitudinales (104) de la lame d'essuyage (106) en étant fixées dans les rainures longitudinales (104) pour que la pièce d'accouplement (30) chevauche à la manière d'une pince les arêtes longitudinales opposées des parties de rail (102) et vient prendre sous ces parties.
